# EUROPÄISCHE PATENTANMELDUNG

(11) **EP 0 943 231 A2**
(43) Veröffentlichungstag der Anmeldung: **22.09.1999**
(21) Anmeldenummer: 99105246.5
(22) Anmeldetag: 13.03.1999
(51) Int. Cl.: A01D 78/02

(54) **Wendestreuer für die Futterwerbung**

(30) Priorität: 14.03.1998 DE 29804564 U
(71) Anmelder: Lederle, Hans, 87653 Eggenthal (DE)
(72) Erfinder: Lederle, Hans, 87653 Eggenthal (DE)
(74) Vertreter: Fiener, Josef

(57) **Zusammenfassung**

Zur einfachten Bauweise und zur Gewichtsreduzierung bei effektiver Wende- und Steuarbeit eines Wendestreuers (3) für die Futterwerbung, mit wenigstens einem um eine horizontale Achse umlaufenden, walzenförmigen Rotor (4), der eine Vielzahl von im wesentlichen radial abstehenden Aufnahmeelementen (5) zur Futteraufnahme aufweist, wird vorgeschlagen, daß der Rotor (4) an einem quer zur Fahrtrichtung (F) verlaufenden Träger (7) außerhalb des äußeren Umlaufkreises (A) der Aufnahmeelemente (5) gelagert ist.

## Beschreibung

Die Erfindung betrifft einen Wendestreuer für die Futterwerbung, mit wenigstens einem um eine horizontale Achse umlaufenden, walzenförmigen Rotor, der eine Vielzahl von im wesentlichen radial abstehenden Aufnahmeelementen zur Futteraufnahme aufweist.

In der Futterwerbung werden für Wende- und Anstreuarbeiten des gemähten Grases i. a. sogenannte Kreiselheuer eingesetzt. Hierbei rotieren die Aufnahmeelemente in Form von nach unten stehenden Zinken um eine im wesentlichen vertikale Achse. Um hierbei eine effektive Streuarbeit, also die Verbreiterung der Grasschwaden zu erreichen, müssen diese Kreisel mit relativ hoher Umfangsgeschwindigkeit rotieren. Hierbei werden jedoch die Gräser aufgrund der hohen Auftreffgeschwindigkeit der Zinken geknickt oder sogar zerschlagen, so daß bei mehrfachem Wenden die Bröckelverluste, insbesondere bei der Heuernte, sehr hoch sind. Damit gehen wertvolle Nährstoffe verloren.

Vor dem Aufkommen derartiger Kreiselheuer waren auch Wendestreuer im praktischen Einsatz, wobei ein walzenförmiger Rotor mit einer Vielzahl von radial abstehenden Aufnahmeelementen vorgesehen war. Um hierbei jedoch das Abschleudern des aufgenommenen Gutes zu vermeiden, war der Rotor an einer Haube gelagert und von dieser abgedeckt, was wiederum zu relativ häufigen Verstopfungen des Wendestreuers geführt hat. Zudem ist hierbei kein wesentlicher Breitstreueffekt aufgetreten. Insbesondere hat dieser Wendestreuer relativ schlechte Ergebnisse beim Abtrocknen des Grases auf der Wiese erbracht, da die Futterhalme in der im wesentlichen gleichen Ausrichtung wieder abgelegt wurden, so daß die im Schwad bereits weitgehend abgetrockneten oberen Grashalme wieder oben zu liegen kamen, wodurch insgesamt relativ schlechte Trockenergebnisse erzielt wurden. Zudem wiesen diese vor ca. dreißig Jahren eingesetzten Wendestreuer einen ziemlich hohen Bauaufwand auf, so daß sie relativ rasch durch die erstgenannten Kreiselheuer ersetzt wurden.

Demzufolge liegt der Erfindung die Aufgabe zugrunde, einen Wendestreuer für die Futterwerbung zu schaffen, der bei besonders einfachem Aufbau und geringem Gewicht eine effektive Wende- und Streuarbeit für Halmfutter bietet.

Diese Aufgabe wird gelöst durch einen Wendestreuer mit den Merkmalen des Patentanspruches 1.

Durch die vorgeschlagene Ausbildung des Rotors werden die aufgenommenen Futterhalme "über Kopf" gewendet und nach ca. 250° wieder auf dem Boden abgelegt. Von besonderer Bedeutung ist hierbei, daß die unteren, nasseren Halmteile eines Schwades direkt nach oben hin gewendet werden, so daß die gleichmäßige Abtrocknung des Futters beschleunigt wird. Zudem erfolgt diese Wendearbeit ohne größere Zinkeneinwirkung besonders schonend, so daß empfindliche Futterhalme nicht zerschlagen werden und damit die Bröckelverluste minimiert werden.

Von besonderem Vorteil ist auch der einfache, leichte Aufbau des Wendestreuers aufgrund des querverlaufenden Trägers, insbesondere eines leichten Rohres an der Rückseite des Rotors. Zudem kann die Streuwirkung durch einfache Winkel-Verstellung zur Fahrtrichtung variiert werden. Weiterhin ist die Arbeitsbreite dieses Wendestreuers durch Ankoppelung zusätzlicher Rotoren an den Mittelrotor besonders einfach, wobei bevorzugt pro Schwadbreite ein Rotor vorgesehen ist. Dabei können in einer Linie drei, fünf, sieben oder noch mehr Rotoren aneinandergekoppelt werden, so daß sehr hohe Arbeitsbreiten erzielt werden können.

Weitere vorteilhafte Ausgestaltungen sind Gegenstand der Unteransprüche.

Nachfolgend wird ein Ausführungsbeispiel anhand der Zeichnung näher erläutert und beschrieben. Hierbei zeigen:
- Fig. 1: eine Draufsicht auf einen Wendestreuer im praktischen Einsatz;
- Fig. 2: eine Querschnittdarstellung des Wendestreuers; und
- Fig. 3: eine vergrößerte Darstellung des Ankoppelungsbereiches zwischen zwei Rotoren des Wendestreuers.

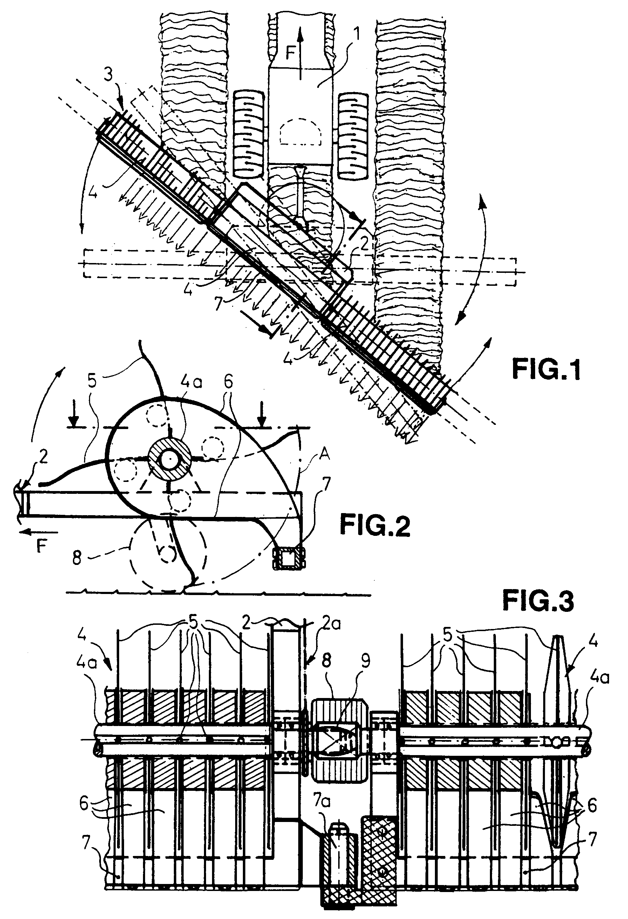

In Fig. 1 ist eine Draufsicht auf einen Traktor 1 im praktischen Einsatz auf der Wiese zur Futterwerbung dargestellt. An den Traktor 1 ist mittels eines gegabelten Rahmens 2 ein Wendestreuer 3 angehängt. Der Rahmen 2 ist hierbei in üblicher Weise durch eine Drei-Punkt-Hydraulik gebildet, kann jedoch auch eine Zuggabel oder dergleichen umfassen. Der Wendestreuer 3 besteht aus wenigstens einem um eine horizontale Achse umlaufenden, walzenförmigen Rotor 4, wobei hier jedoch die bevorzugte Ausführung mit zwei seitlich angekoppelten Rotoren 4 dargestellt ist. Wie strichliert dargestellt, kann der Wendestreuer 3 seitlich besonders einfach erweitert werden, beispielsweise auf fünf oder sieben Rotoren, wobei jeder Rotor 4 die übliche Schwadbreite von ca. 1 Meter umfaßt.

Die Rotoren 4 erstrecken sich hierbei etwa quer zur Fahrtrichtung F des Traktors 1, wobei durch nicht näher dargestellte Verschwenkzylinder am Rahmen 2 der Winkel zur Fahrtrichtung variiert werden kann, um den Streuwinkel der Rotoren 4 bezüglich der mit Wellenlinien angedeuteten Futterschwaden zu variieren und damit auch den Breitstreueffekt des Wendestreuers 3.

In Fig. 2 ist ein Querschnitt durch den Rotor 4 dargestellt. Der Rotor 4 weist eine zentrale Welle 4a auf, an der eine Vielzahl von zinkenförmigen Aufnahmeelementen 5 angeordnet ist. Die Aufnahmeelemente 5 stehen hierbei im wesentlichen radial von der Welle 4a ab und verlaufen mit ihrer Spitze knapp über dem Boden der Wiese. Hierdurch werden Futterhalme aufgenommen und nach einer Umlaufbewegung von ca. 250° nach unten abgelegt. Hierbei nehmen die bei der Aufnahme zunächst unten liegenden Halme im Futterschwad die "Über-Kopf"-Stellung ein, so daß die jeweils untersten Halme nach dem Wendestreuen nach oben zu liegen kommen. Diese Wendebewegung kann hierbei auch durch Abstreifbügel 6 oder ähnliche Abstreifelemente, z.B. ein Abstreifkamm im Rückbereich über einem Träger 7 unterstützt werden, die jeweils zwischen den Aufnahmeelementen 5 angeordnet sind. Hierbei verlaufen die Abstreifbügel 6 im Rückbereich des Rotors 4 (rechte Seite in Fig. 2) bis zum äußeren Umlaufkreis A der Aufnahmeelemente 5, so daß die aufgenommenen Futterhalme sicher und schonend abgelegt werden. In dem Rückbereich sind die Abstreifbügel 6 an einem rohrförmigen Träger 7 befestigt und verlaufen zu diesem hin im wesentlichen evolventenförmig. Das Trägerrohr 7 des jeweiligen Rotors 4 ist hierbei etwa um die halbe Lange der Aufnahmeelemente 5 nach unten hin versetzt.

Die Aufnahmeelemente 5 können als Federstahlzinken ausgebildet sein, wie sie auch von Kreiselheuern bekannt sind. Aufgrund der sehr langsamen Umlaufgeschwindigkeit können jedoch als Aufnahmeelemente 5 auch Bürsten oder paddel- bzw. keilförmige Kunststoffteile mit radialen Versteifungsrippen dienen, wie dies in Fig. 3, rechts dargestellt ist. Diese Kunststoff-Aufnehmer 5 können dabei auch zur Rotorumlaufebene geneigt angeordnet sein. Die Abstreifer 6 sind in diesem Falle lediglich einfache kammförmige Zacken an der Oberseite des Quer-Trägers 7. Die Aufnahmeelemente 5 sind dabei bevorzugt wendelförmig entlang der Welle 4a des Rotors 4 angeordnet, wie in Fig. 1, linker Rotor angedeutet, ggf. in mehreren Reihen, so daß sich eine kontinuierliche Aufnahmebewegung der Futterhalme und damit ein günstiger Futterfluß ergibt.

In Fig. 3 ist die Ankoppelungsstelle zwischen zwei Rotoren 4 dargestellt. Die beiden Rotoren 4 sind dabei mit einem Schwenkgelenk 7a zwischen den jeweiligen Trägern 7 verbunden, um eine optimale Bodenanpassung in Höhenrichtung zu ermöglichen. Die Wellen 4a der Rotoren 4 sind durch eine Kupplung 9 in Steckhülsen- oder Ringform miteinander formschlüssig verbunden, so daß nach Lösen des Schwenkgelenkes 7a der jeweilige Rotor 4 schnell an- bzw. abgekuppelt werden kann, um die Breite des Wendestreuers 3 zu variieren. Unterhalb der Kupplung 9 ist zudem jeweils zwischen zwei Rotoren 4 ein Stützrad 8 vorgesehen, so daß sich eine genaue Bodenanpassung der Rotoren 4 des Wendestreuers 3 ergibt. Die Kupplung 9 kann auch durch eine über die Wellenenden gestülpte Schraubenfeder gebildet sein, so daß sich ein Ausgleich in mehreren Freiheitsgraden ergibt.

Es sei darauf hingewiesen, daß somit der Antrieb des in Fig. 1 mittleren Rotors 4 von dem Traktor 1 über eine Zapfwelle und den Rahmen 2, z. B. über einen einzigen seitlichen Ketten- oder Riemenantrieb 2a, ausreicht, da der Antrieb für die äußeren, seitlichen Rotoren 4 von dem mittleren Rotor 4 abgezweigt werden kann. Hierdurch ergibt sich eine besonders einfache und leichte Bauweise ohne Zwischengetriebe und gegenüber Kegelradantrieben ein geringer Kraftbedarf. Hierdurch kann ein relativ leistungsschwacher und leichter Traktor eingesetzt werden, was zudem die Bodenverdichtung reduzieren hilft.

Zudem ermöglicht diese Anordnung der relativ leichten walzenförmigen Rotoren 4 an dem bevorzugt rohrförmigen Quer-Träger 7 eine einfache Überführung in die Transportstellung per Hand bzw. Seilzug oder mittels einfacher Pneumatik- oder Hydraulikzylinder, um die beiden (oder mehr) äußeren Rotoren 4 hochklappen zu können. Hierbei ist auch ohne weiteres das dachförmige Hochklappen von fünf derartiger Rotoren 4 möglich, um somit selbst bei sehr großen Arbeitsbreiten des Wendestreuers 3 eine geringe Transportbreite für den Straßentransport zu ermöglichen.

## Patentansprüche

1. Wendestreuer für die Futterwerbung, mit wenigstens einem um eine horizontale Achse umlaufenden, walzenförmigen Rotor (4), der eine Vielzahl von im wesentlichen radial abstehenden Aufnahmeelementen (5) zur Futteraufnahme aufweist,
dadurch gekennzeichnet, daß
der Rotor (4) an einem quer zur Fahrtrichtung (F) verlaufenden Träger (7) außerhalb des äußeren Umlaufkreises (A) der Aufnahmeelemente (5) gelagert ist.

2. Wendestreuer nach Anspruch 1, dadurch gekennzeichnet, daß Abstreifbügel (6)im Rückbereich des Rotors (4) zum äußeren Umlaufkreis (A) der Aufnahmeelemente (5) hin evolventenförmig verlaufen.

3. Wendestreuer nach Anspruch 1 oder 2, dadurch gekennzeichnet, daß die Aufnahmeelemente (5) als Federstahlzinken oder als paddelförmige, keilförmige oder streifenförmige Kunststoffteile ausgebildet sind.

4. Wendestreuer nach einem der Ansprüche 1 bis 3, dadurch gekennzeichnet, daß die Aufnahmeelemente (5) am Rotor (4) wendelförmig angeordnet sind, insbesondere in mehreren Reihen und geneigt zur Umlaufebene.

5. Wendestreuer nach einem der Ansprüche 1 bis 4, dadurch gekennzeichnet, daß die jeweilige Welle (4a) des Rotors (4) zur Fahrtrichtung (F) des Traktors (1) geneigt ausgerichtet ist, insbesondere während der Fahrt hydraulisch verstellbar ist.

6. Wendestreuer nach einem der Ansprüche 1 bis 5, dadurch gekennzeichnet, daß mehrere Rotoren (4) in einer Linienanordnung vorgesehen sind, die stirnseitig mit einer Kupplung (9) aneinander angekoppelt sind.

7. Wendestreuer nach Anspruch 6, dadurch gekennzeichnet, daß die Kupplung (9) zum Anschluß weiterer Rotoren (4) als Steck- oder Ringkupplung ausgebildet ist, insbesondere als Schraubenfeder.

8. Wendestreuer nach einem der Ansprüche 1 bis 7, dadurch gekennzeichnet, daß an den Stirnseiten des Rotors (4) Stützräder (8) angeordnet sind, insbesondere unterhalb der Kupplung (9) zwischen benachbarten Rotoren (4).

9. Wendestreuer nach einem der Ansprüche 1 bis 8, dadurch gekennzeichnet, daß der Träger (7) im Rückbereich des Rotors (4) um etwa die halbe Länge der Aufnahmeelemente (5) unterhalb der Welle (4a) des Rotors (4) angeordnet ist.

10. Wendestreuer nach einem der Ansprüche 1 bis 9, dadurch gekennzeichnet, daß am Träger (7) zwischen jeweils zwei Rotoren (4) ein Schwenkgelenk (7a) angeordnet ist.
